# EUROPÄISCHE PATENTANMELDUNG

(11) **EP 2 732 737 A1**
(43) Veröffentlichungstag der Anmeldung: **21.05.2014**
(21) Anmeldenummer: 13192989.5
(22) Anmeldetag: 14.11.2013
(51) Int. Cl.: A47J 31/06, A47J 31/44

(54) **Mikrosieb**

(30) Priorität: 14.11.2012 DE
(71) Anmelder: Moser, Jürg, 3421 Lyssach (CH)
(72) Erfinder: Moser, Jürg, 3421 Lyssach (CH)

(57) **Zusammenfassung**

Kaffeesieb mit einer freien offenen Siebfläche von mehr als 25 % der gesamten Siebfläche sowie dessen Verwendung in Kaffeehalbautomaten.

## Beschreibung

Die vorliegende Erfindung betrifft ein Kaffeesieb, dessen Verwendung sowie ein Verfahren zur Verbesserung der Crema eines gebrühten Kaffees.

Die Crema eines Kaffees lässt durch Menge, Farbe, Dichte und ihre Standzeit Rückschlüsse auf die Zubereitung des gebrühten Kaffees zu. Je älter ein Kaffee, desto weniger Crema, weil alternder Kaffee das crema-bildende CO₂ verliert. Kaffee, der zu heiß gebrüht wurde, hat meist kaum Crema, die dann dunkelbraun und aufgerissen ist. Zu schnell oder zu kalt gebrühter oder auch zu dünner Espresso hat eine sandfarbene Crema.

Einfache Espressomaschinen, die meisten Kaffeevollautomaten und die meisten Arten von Maschinen, die mit vorkonfektionierten Portionen arbeiten (z. B. Nespresso, Senseo), produzieren über ein Ventil künstlich Crema, die keinen Rückschluss auf die Röstung und Zubereitung zulässt. Diese künstlich erzeugte Crema hat mit dem Geschmack echter Crema wenig gemeinsam, wird aber dennoch oft als wesentliches Merkmal solcher Maschinen angepriesen. Sie besteht schlichtweg aus mit Luft aufgeschäumtem Kaffee, wodurch sie nicht separat herausgeschmeckt werden kann, was jedoch aufgrund mangelnder Erfahrung den wenigsten Konsumenten solcher Espressos negativ auffällt.

"Falsche Crema" erkennt man auf den ersten Blick an ihrer groben Bläschenstruktur. Die Blasen echter Crema sind mit bloßem Auge kaum zu erkennen. Echte Crema bildet sich nicht direkt beim Herausrinnen des Espresso aus der Maschine, sondern steigt in den Sekunden danach aus dem Espresso auf.

Aufgabe der vorliegenden Erfindung ist die Bereitstellung eines Kaffeesiebs mit dem es erstmals möglich ist, echte Crema in erhöhter Menge herzustellen.

Diese Aufgabe wird erfindungsgemäß gelöst durch ein Löcher aufweisendes Kaffeesieb mit einer freien offenen Siebfläche mehr als 25 % der gesamten Siebfläche beträgt.

Unter dem Begriff "freien offene Siebfläche" wird hier und im Folgenden die Fläche verstanden, die durch die Summe der Flächen aller Löcher in dem Sieb besteht. Die genaue Bestimmung der "freien offene Siebfläche" im Sinne der vorliegenden Erfindung wird in den Beispielen im Detail gezeigt.

Unter dem Begriff "Löcher aufweisendes Kaffeesieb" wird hier und im Folgenden ein Kaffeesieb mit Löchern verstanden, wie sie beispielsweise durch Bohren, Microdrilling oder auch Lasern entstehen. Unter dem Begriff "Löcher aufweisendes Kaffeesieb" werden folglich keine Siebe verstanden, die aus Vliesen, Geweben, Gewirken oder gesinterten Massen bestehen.

Mit dieser Lösung ist es erstmals möglich, echte Crema in erhöhter Menge herzustellen, ohne z.B. über zusätzliche Ventile Luft in den Kaffee einzubringen, um falsche Crema zu bilden, die zur Erhöhung der Menge an echter Crema beiträgt wobei das Gemisch aus echter und falscher Crema vom Laien auf den ersten Blick von echter Crema schwer zu unterscheiden ist.

Die vorliegende Erfindung betrifft in einer weiteren Ausführungsform die Verwendung eines erfindungsgemäßen Kaffeesiebs zur Verbesserung bzw. Erhöhung der Menge der Crema des gebrühten Kaffees.

Hierbei wird das erfindungsgemäße Kaffeesieb als Auslaufsieb verwendet, besonders bevorzugt in einem Kaffeebrühgerät bei einer Einlauftemperatur des Wassers auf das gemahlene Kaffeepulver zwischen 80 und 99 °C und einem Wasserdruck zwischen 8 und 15 bar.

Ganz besonders bevorzugt wird das erfindungsgemäße Kaffeesieb in Halbautomaten eingesetzt. Mit dem Begriff "Halbautomat" werden solche Kaffeebrühgeräte verstanden, die einen Siebträger mit einem Auslaufsieb aufweisen, in den manuell der gemahlene Kaffee eingefüllt wird. Solche Halbautomaten werden insbesondere dort eingesetzt, wo es auf eine hohe sensorische und olfaktorische Eigenschaft des gebrühten Kaffees ankommt.

Die vorliegende Erfindung betrifft darüber hinaus ein Verfahren zur Erhöhung der Menge an echter Crema von gebrühtem Kaffee durch Einsatz eines Löcher aufweisenden Kaffeesiebs mit einer freien offenen Siebfläche von mehr als 25 % der gesamten Siebfläche als Auslaufsieb, insbesondere in Halbautomaten.

Die folgenden Beispiele dienen der Erläuterung der Erfindung, ohne diese darauf zu beschränken.

### Vergleichspeispiel:

In ein zylindrische Glas mit eine Höhe von 148 mm und einem Innendurchmesser von 49 mm wird mit dem Halbautomaten "Viva S 2009" der Fa. Reneka eine Portion Kaffee unter Verwendung von 15 g gemahlenen Kaffees einer handelsüblichen Robustasorte gebrüht.

Das im Siebträger verwendete Auslaufsieb hat einen maximalen Außendurchmesser von 37 mm und folglich eine "gesamte Siebfläche" im Sinne der vorliegenden Erfindung von 1.075,2 mm². Das Auslaufsieb weist 40.240 Löcher mit einem Durchmesser von 90 µm auf. Die Fläche eines Lochs beträgt 0,006361 mm², die offene Fläche aller Löcher folglich 255,9 mm². Die "freie offene Siebfläche" im Sinne der vorliegenden Erfindung beträgt damit 23,8 % der gesamten Siebfläche.

Während des Brühvorgangs ist die Bildung der echten Crema deutlich zu beobachten: Der Kaffee zeigt anfänglich drei Phasen: Die unterste ist die an der charakteristischen schwarzbraunen Farbe zu erkennende Kaffeephase, darüber ist eine hellbräunliche, flüssige Phase aus Kaffee und der nach oben steigende echten Crema gebildete Phase und darüber wiederum die Phase aus echter Crema. Die zweite Phase trennt sich nach einiger Zeit in Kaffee- und Cremaphase. Nachdem die zweite Phase sich vollständig entmischt hat, werden die Höhe der Kaffephase und die der echten Crema bestimmt: Die Höhe der Kaffeephase beträgt 102 mm, die Höhe der Cremaphase beträgt 10 mm.

### Erfindungsgemäßes Beispiel:

Das Vergleichsbeispiel wird wiederholt, jedoch weist das im Siebträger verwendete Auslaufsieb (maximaler Außendurchmesser von 37 mm) 25.600 Löcher mit einem Durchmesser von 120 µm auf. Die Fläche eines Lochs beträgt 0,011309 mm², die offene Fläche aller Löcher folglich 289,5 mm². Die "freie offene Siebfläche" im Sinne der vorliegenden Erfindung beträgt damit 26,9 % der gesamten Siebfläche.

Die Höhe der Kaffeephase beträgt 101 mm, die Höhe der Cremaphase beträgt 14 mm.

Diese Beispiel zeigt sehr deutlich, dass der jüngst zu beobachtende Trend zu immer kleineren Löchern im Siebträger keinen Einfluß auf die Eigenschaft der echten Cremabildung und damit auf den optisch recht einfach zu kontrollierenden Charakter der Qualität eines Kaffees hat.

Eine sensorische Verkostung der beiden Kaffees zeigt einen deutlich verbesserten Geschmack des unter Verwendung des erfindungsgemäßen Siebs gebrühten Kaffees.

## Patentansprüche

1. Löcher aufweisendes Kaffeesieb, **dadurch gekennzeichnet, dass** die freie offene Siebfläche mehr als 25 % der gesamten Siebfläche beträgt.

2. Verwendung eines Löcher aufweisendes Kaffeesiebs mit einer freien offenen Siebfläche von mehr als 25 % der gesamten Siebfläche zur Verbesserung der Crema des gebrühten Kaffees.

3. Verwendung nach Anspruch 2 als Auslaufsieb.

4. Verwendung nach Anspruch 3 in einem Kaffeebrühgerät bei einer Einlauftemperatur des Wassers zwischen 80 und 99 °C und einem Wasserdruck zwischen 8 und 15 bar.

5. Verwendung nach Anspruch 4, **dadurch gekennzeichnet, dass** das Kaffeebrühgerät ein Halbautomat ist.

6. Verfahren zur Erhöhung der Menge an echter Crema von gebrühtem Kaffee, **dadurch gekennzeichnet, dass** ein Kaffeesieb mit einer freien offenen Siebfläche von mehr als 25 % der gesamten Siebfläche als Auslaufsieb, insbesondere in Halbautomaten, verwendet wird.
